# EUROPÄISCHE PATENTANMELDUNG

(11) **EP 1 908 815 A2**
(43) Veröffentlichungstag der Anmeldung: **09.04.2008**
(21) Anmeldenummer: 07007547.8
(22) Anmeldetag: 12.04.2007
(51) Int. Cl.: C10L 1/02

(54) **Kraftstoffe und Kraftstoffmischungen mit synthetischen Kohlenwasserstoffen mit hohem Isoparaffin-Anteil**

(30) Priorität: 04.10.2006 EP 06020853
(71) Anmelder: Last Point Ltd., 2012 Nicosia (CY)
(72) Erfinder: Feyertag, Dieter, 9020 Klagenfurt (AT); Hyman, Richard J., Narn IV12 5QH (GB); Auerbach, Paul X.C.R.M., London SW20 0NT (GB); Ecker, Alfred, 1180 Wien (AT)
(74) Vertreter: Andrae, Steffen

(57) **Zusammenfassung**

Kraftstoffzusammensetzung zur Verbrennung in Motoren und Heizanlagen, die neben Fettsäuremethylestern oder einer anderen Kohlenwasserstoff-Komponente eine synthetische Kohlenwasserstoff-Komponente mit mehr als 75 Masse-% Isoparaffinen, einem Pourpoint von -20 °C oder tiefer und einer Cetanzahl im Bereich vom 40 bis 70 enthält, wobei die Konzentration der Kohlenwasserstoff-Komponente mit hohem Isoparaffinanteil in der Zusammensetzung zwischen 1 und 99 Masse-% liegt, sowie biogener Flugzeugturbinentreibstoff auf Basis biogener Alkohole, der erhalten wird nach einem Verfahren, bei dem aus einem olefinkohlenwasserstoff-Gemisch mit einem Anteil an ungeraden Olefinen und Isoolefinen von mindestens 50 Masse-% ein synthetischer Kohlenwasserstoff mit einem Isoparaffin-Anteil von mindestens 75 Masse-% oligomerisiert bzw. polymerisiert wird, woraus nach einer folgenden Hydrierung und Rektifikation ein Kerosin abgenomen wird, das in seinem Kohlenstoffanteil 1,2 x 10⁻¹² Masse-% des Radionuklids ¹⁴C aufweist.

## Beschreibung

Die vorliegende Erfindung betrifft das Gebiet der Herstellung und Verwendung von flüssigen synthetischen Kraftstoffen, insbesondere von solchen vom Typ Dieselkraftstoff.

Der Begriff "Kraftstoff" wird dabei in der vorliegenden Anmeldung in einem umfassenden erweiterten Sinne verwendet und soll nicht nur zum Betrieb von Fahrzeug- oder Flugzeug-Verbrennungsmotoren bzw. -triebwerken verwendete Flüssigkeiten bezeichnen. Wenn ein Kraftstoff, wie er in der vorliegenden Anmeldung beschrieben wird, anderweitig eingesetzt wird, z.B. als Brennstoff in Generatoren oder in dafür geeigneten Heizanlagen, soll eine solche Verwendung nicht aus dem Schutzbereich der vorliegenden Erfindung heraus führen, auch wenn auf derartige Verwendungsmöglichkeiten im Rahmen der nachfolgenden Beschreibung nicht mehr weiter eingegangen wird.

Um die hohe Abhängigkeit der Industrieländer von Rohölimporten und die Belastung der Umwelt durch das Treibhausgas Kohlendioxid aus der Verbrennung von Kohlenwasserstoffen aus fossilen Rohstoffen zu verringern, wird weltweit nach alternativen Energieträgern gesucht, die regenerativ und umweltschonend sind. In der EU müssen daher neuerdings den konventionellen Otto- und Dieselkraftstoffen auf der Basis von Rohöl Alternativkraftstoffe aus Biomasse zugesetzt werden. Derzeit sind diese Alternativkraftstoffe aus Biomasse Alkohole und Ether für Ottokraftstoff, und Fettsäureester, insbesondere Fettsäuremethylester (Abkürzung FAME; Fatty Acid Methyl Ester) aus mit einem Alkanol, insbesondere Methanol oder ggf. Ethanol, umgeesterten Ölen und Fetten, insbesondere Pflanzenölen, als Dieselkraftstoff oder als Zusatz zu einem herkömmlichen Dieselkraftstoff. FAME werden allgemein häufig mit Biodiesel gleichgesetzt. In einem strengen Sinne sind jedoch nur solche Fettsäureester, die die Vorgaben der Europäischen Norm EN 14214 (national umgesetzt z.B. als DIN EN 14214 oder ÖNORM EN 14214) erfüllen, als Biodiesel zu bezeichnen.

Die o.g. genannten Alternativkraftstoffe unterscheiden sich in ihrem technischen Verhalten in vielfacher Hinsicht von den herkömmlichen Kraftstoffen auf Rohölbasis und würden bei ihrer Verwendung als alleinige Kraftstoffe, soweit das im Einzelfall möglich ist, teilweise gravierende Anpassungen der herkömmlichen Motoren verlangen. Um die Motoren nicht anpassen zu müssen, werden daher diese Alternativkraftstoffe derzeit in erster Linie nur in geringer Konzentration (meist bis zu 5 %) den konventionellen Kraftstoffen beigemischt.

Die Anforderungen an die Qualität der Ottokraftstoffe sind in der EN 228 spezifiziert. Für Dieselkraftstoff gelten die in der EN 590 festgelegten Spezifikationen, und diese müssen auch bei Zusatz von Alternativkraftstoffen eingehalten werden, d.h. im Falle von Diesel bei Zusatz von Biodiesel.

An Dieselkraftstoffe für den Einsatz in modernen hochgezüchteten Motoren werden besonders hohe Anforderungen gestellt. Es müssen zahlreiche anwendungstechnische Eigenschaften (z.B. bezüglich der an den Verwendungsort angepassten Kälte- und Lagerstabilitäten) erfüllt werden, und gleichzeitig sollen die Emissionen aus der Verbrennung des Dieselkraftstoffs im Motor minimiert werden.

Einige der Anforderungen an einen modernen Dieselkraftstoff sind insbesondere:
- Um ein optimales Brennverhalten und einen ruhigen Betrieb zu gewährleisten, muss der Kraftstoff eine möglichst hohe Cetanzahl aufweisen.
- Um Schadstoffemissionen zu reduzieren und Korrosionen zu vermeiden, werden "schwefelfreie¹" Dieselkraftstoffe verlangt.
- Schwefelfreie Dieselkraftstoffe sind jedoch durch die scharfe Hydrierung bei ihrer Herstellung ihrer natürlichen Schmierfähigkeit beraubt und müssen daher mit einem Lubricity-Zusatz zur Schmierung der Einspritzpumpe in PKW-Motoren versehen werden.
- Um Rauch, Ruß und Abgaspartikel zu verringern, soll der Kraftstoff möglichst aromatenarm bzw. aromatenfrei¹ sein.
- Damit der Kraftstoff längere Zeit lagerbar ist, sollte er keine ungesättigten Verbindungen (z.B. aus Krackanlagen oder mehrfach ungesättigte Pflanzenölester) enthalten, oder muss mit Antioxidantien stabilisiert werden.
- Um den Kraftstoff auch im Winter in Gebieten, in denen ggf. hohe Minustemperaturen auftreten können, transportieren, lagern und verwenden zu können, muss er eine entsprechende Kältestabilität besitzen.
   ¹ Die Begriffe schwefelarm bzw. schwefelfrei beziehen sich dabei im Rahmen der vorliegenden Anmeldung auf Schwefelkonzentrationen von < 50 ppm bzw. < 10 ppm Schwefel, während die Begriffe aromatenarm bzw. aromatenfrei für Konzentrationen von Mehrkernaromaten im Bereich von < 0,5 Masse-% bzw. < 10 ppm stehen. Einfache ("einkernige") Aromaten können ggf. bis zu Konzentrationen von etwa 9 Masse-% vorhanden sein.

Wesentliche Beiträge zu den Emissionen von Schadstoffen und zum Ausstoß von Ruß, Abgaspartikeln und Staub liefern Aromaten (insbesondere Mehrkernaromaten), weil diese lange Verbrennungszeiten benötigen und in den Motoren nur unvollständig verbrennen.

Durch Zusatz von sauerstoffhaltigen Verbindungen kann das Ausbrandverhalten verbessert werden. Die sauerstoffhaltigen Verbindungen führen zu einem Eintrag von gebundenem Sauerstoff direkt in den Kraftstoff und bewirken so einen besseren Ausbrand, führen jedoch in der Regel zu einem etwas verminderten Brennwert. Der Zusatz von sauerstoffhaltigen Verbindungen ist derzeit in den Normen begrenzt, weil durch zu hohe Anteile die motortechnischen Kennwerte verstellt werden müssten.

FAME oder Biodiesel stellt einen möglichen sauerstoffhaltigen Zusatz dar, der schadstoffarm ist und ein sehr gutes Ausbrandverhalten zeigt und außerdem ein hocherwünschtes Schmierverhalten aufweist. Trotzdem stößt die vom Gesetzgeber gewünschte Einführung von Biodiesel auf dem Kraftstoffbereich auch auf eine Reihe von technischen und ökonomischen Schwierigkeiten.

Da Pflanzen, die für die Pflanzenölerzeugung geeignet sind, nicht gleichmäßig in allen Klimazonen gedeihen, kann Pflanzenöl, das zur Biodieselherstellung geeignet ist, z.B. in Mitteleuropa nicht in denjenigen Mengen hergestellt werden, wie sie zur Erfüllung der Beimischpflicht benötigt werden. Viele besonders ölreiche oder kostengünstig Pflanzenöle liefernde Pflanzen, z.B. Ölpalmen, gedeihen nur in klimatisch besonders begünstigten, entfernten Gegenden, z.B. in Südasien. Es wäre daher möglich und auch ökonomisch sinnvoll, Pflanzenölester (z.B. Palmölester) aus wärmeren Gegenden zu importieren, um die heimischen Produkte zu ergänzen, ggf. zusätzlich zur Erzeugung von Estern aus Pflanzenaltöl oder Fetten anderer Herkunft.

Derartige Importprodukte weisen jedoch leider ein sehr schlechtes Kälteverhalten auf.

In den Normen EN 14214 und EN 590 wird das zu fordernde Kälteverhalten von Biodiesel bzw. Dieselkraftstoff für bestimmte Klimaklassen, die die klimatischen Bedingungen eines Landes, ggf. auch noch jahreszeitenabhängig, widerspiegeln, definiert. Die nachfolgende Tabelle 1 enthält die Grenzwerte für den sog. CFPP-Wert von Kraftstoffklassen vom Dieseltyp, die in Abhängigkeit von den klimatischen Bedingungen, die in einem Land herrschen, jeweils vorgeschrieben sein können.

**Tabelle 1**

| CFPP-Grenzwerte (bestimmt nach EN 116) für verschiedene Klimaklassen | |
|---|---|
| Klimaklasse | CFPP-Grenzwert (max) °C |
| Klasse A | 5 |
| Klasse B | 0 |
| Klasse C | -5 |
| Klasse D | -10 |
| Klasse E | -15 |
| Klasse F | -20 |

Der in der Tabelle 1 angebene Wert für den CFPP (Cold Filter Plugging Point) ist ein Kennwert für die Kältefestigkeit eines Kraftstoffs im Endverbrauch, der nach der Norm EN 116 (bzw. ASTM D-6371) bestimmt wird. Er ist definiert als die höchste Temperatur, bei der ein flüssiges Kraftstoffprodukt, das unter festgelegten Bedingungen abgekühlt wird, nicht mehr durch einen Filter definierter Porengröße in einer bestimmten Zeiteinheit fließt.

In südlichen Ländern ist aufgrund der dort üblichen konstanten hohen Temperaturen keine besondere Winterfestigkeit erforderlich, so dass der dort zulässige CFPP-Spezifikationswert für das Kälteverhalten bei positiven Temperaturen liegen kann (Klasse A). In nördlichen Ländern hingegen muss der CFPP von Kraftstoffen bei tieferen Temperaturen liegen. In den meisten Ländern Mitteleuropas beträgt z.B. der festgelegte CFPP für einen Kraftstoff von Winterqualität <-20°C (Klasse F).

Die Fettsäurezusammensetzung eines beliebigen FAME-Produkts spiegelt die Fettsäurezusammensetzung in dem als Ausgangsprodukt eingesetzten Pflanzenöl (einem Fettsäureglycerintriester) wider. Zu hohe Mengen an gesättigten Fettsäuren sind der Grund für ein schlechtes Kälteverhalten, während ungesättigte Fettsäuren für eine schlechte Oxidationsstabilität verantwortlich sind.

Pflanzenöl-Gemische aus einfach ungesättigten Fettsäuren und gesättigten Fettsäuren in mäßigen Konzentrationen können ein noch akzeptierbares Kälteverhalten und eine akzeptable Oxidationsstabilität aufweisen.

In Europa werden überwiegend Methylester aus den Pflanzenölen Rapsöl, Sonnenblumenöl, aber auch aus Altspeiseölen verwendet. Der Rapsölmethylester ist praktisch der einzige Ester, der auch im Winter zu 100% (ohne Vermischung) als Biodiesel verwendet werden kann und der bei Zusatz von Fließverbesserern den für das Kälteverhalten festgelegten CFPP-Wert (unter -20°C) für Länder mit kalten Jahreszeiten erfüllt.

Die unvermischten Methylester aus vielen anderen Pflanzenölen (z.B. Palmöl, Sonnenblumenöl, Kokosöl, Sojaöl, Baumwollsamenöl) weisen einen zu hohen Wert für den CFPP auf, so dass sie bei winterlichen Temperaturen fest werden, ausfallen und die Kraftstofffilter verlegen können.

Palmölmethylester (nachfolgend abgekürzt als POME), ein auf dem Weltmarkt ausreichend und kostengünstig erhältliches Produkt, weist aufgrund seiner Zusammensetzung aus überwiegend gesättigten Fettsäuremethylestern eine niedrige Jodzahl und damit hohe Oxidationsstabilität auf. Sein Nachteil ist aber, dass POME aufgrund seines hohen Anteils an Estern von gesättigten C16- und C18-Fettsäuren einen hohen CFPP (>10°C) und damit ein besonders schlechtes Kälteverhalten aufweist.

Bei Einsatz von POME mit einem CFPP >10°C kann die Anforderung an einen CFPP für einen Dieselkraftstoff für Mitteleuropa von <-20°C weder pur noch im Gemisch mit einem konventionellen Dieselkraftstoff erfüllt werden. Auch der Transport von Palmöl oder POME aus den Produktionsländern in Länder mit niedrigeren Temperaturen und die Lagerung vor Ort erfordert bereits besondere Vorsichtsmaßnahmen, damit das Produkt in der Kälte nicht ausfällt und einstockt, da ein solches Produkt dann nicht mehr fließfähig ist und nicht verpumpt werden kann.

Bisher untersuchte Möglichkeiten zur Verbesserung des Kälteverhaltens von problematischen FAME-Produkten sind beispielhaft die folgenden:
- Abkühlen des Produkts und Abfiltrieren des festen Anteiles; nachteilig an einem solchen Vorgehen ist, dass nur ein geringer Anteil des ursprünglichen Produkts mit dem angestrebten gutem Kälteverhalten zurück bleibt.
- Vermischen mit weniger problematischen FAME-Produkten anderer Herkunft mit besserem Kälteverhalten; nachteilig ist, dass große Mengen der relativ teuren FAME erforderlich sind und in der Regel die Jodzahl und Oxidationsstabilität verschlechtert werden.
- Vermischen mit herkömmlichen Kohlenwasserstoffen auf Erdölbasis, die ein besseres Kälteverhalten aufweisen, wie z.B. mit Dieselkraftstoff oder Kerosin; nachteilig ist, dass durch die Zumischung von konventionellem Dieselkraftstoff oder Kerosin (Jet A1) Aromaten, insbesondere Mehrkernaromaten, in das Gemisch gelangen, die beim Verbrennen die Umwelt durch Ruß-, Feinteilchen- und Staubbildung belasten.
- Zugabe von bestimmten Fließverbesserern; nachteilig sind die allgemein schlechte Ansprechbarkeit von FAME wie z.B. POME auf solche Zusätze und die hohen Kosten.

Es ist daher von großem praktischen Interesse, eine Möglichkeit zu finden, FAME-Produkte mit zu hohen CFPPs, ggf. selbst POME-Produkte, in Gemische überführen zu können, die als ausreichend kältefeste Kraftstoffe vom Dieseltyp mit guten Brennverhalten dienen können bzw. ohne Schwierigkeiten auch in einem kalten Klima transportiert und gelagert werden können, z.B. für eine Endabmischung bei einem lokalen Kraftstoff-Produzenten oder -Verbraucher.

Alles in allem ist die Ausgangslage jedoch so, dass eine Verbesserung von zahlreichen wichtigen Eigenschaften von Kraftstoffen, insbesondere Dieselkraftstoffen, häufig nur auf Kosten anderer Eigenschaften erreichbar ist, so dass die nötige Optimierung in der Regel ein komplexer technischer und ökonomischer Entscheidungsprozess ist, wobei Faktoren wie Brennverhalten, Abgasentwicklung, Kälteverhalten, Dichte und Schmierfähigkeit eine zentrale Rolle spielen. Wie eingangs erwähnt kann man hierbei im Allgemeinen sagen, dass höhere Cetanzahlen mit einem optimierten Brennverhalten korrelieren, während niedrige Aromaten- und Schwefelwerte für reduzierte Schadstoffemissionen von Bedeutung sind.

Die Erfinder stellten es sich zum Ziel, durch eine adäquate Abmischung mit geeigneten Mischungskomponenten einen Kraftstoff bereit zu stellen, der eine optimale Kombination der oben genannten Eigenschaften bietet, ohne dass in einem der genannten Bereiche nennenswerte Abstriche gemacht werden müssen.

Dieses Ziel wird durch Kraftstoffzusammensetzungen gemäß Anspruch 1 und Anspruch 6 und deren vorteilhafte Ausgestaltungen gemäß den Ansprüchen 2 bis 5 bzw. 7 und deren Verwendungen gemäß Anspruch 10 gelöst.

Die Erfindung umfasst ferner ein Verfahren zur Herstellung eines biogenen Flugzeugturbinentreibstoffs mit hohem Isoparaffinanteil gemäß Anspruch 8 und den nach diesem Verfahren erhältlichen Treibstoff als solchen gemäß Anspruch 9.

Die erfindungsgemäßen Kraftstoffzusammensetzungen sind dabei vorzugsweise im wesentliche binäre Zusammensetzungen aus nur zwei Arten von Typen von Kraftstoff-Komponenten, nämlich den Komponenten (i) und (ii) gemäß Anspruch 1, wobei die Zusammensetzungen allerdings ggf. noch Additive enthalten können, um das Betriebsverhalten bei der beabsichtigten Endverwendung zu verbessern. Im Rahmen der Grundzusammensetzung gemäß Anspruch 1 liegen Spezialzusammensetzungen, die berücksichtigen, ob die Zusammensetzung direkt für eine Verwendung als Kraftstoff (z.B. Dieselkraftstoff) bestimmt ist, oder ob vorgesehen ist, sie zum Abmischen mit einem herkömmlichen Kraftstoff zu verwenden. Ferner ergeben sich unterschiedliche Randbedingungen für die praktisch sinnvollen Konzentrationbereiche der Komponenten (i) und (ii) auch noch daraus, welche Eigenschaften, insbesondere im Hinblick auf seine Kältefestigkeit, der jeweils verwendete Fettsäureester bzw. das jeweils verwendete Fettsäureestergemisch aufweist.

Im Vorfeld der vorliegenden Erfindung untersuchten die Erfinder zur Erreichung des o.g. Ziels verschiedene Kombinationen aus sauerstoffhaltigen Fettsäureestern, insbesondere FAME-Verbindungen (Fettsäuremethylestern vom Biodieseltyp) und speziellen Kohlenwasserstoff-Gemischen, die im Hinblick auf Brennverhalten und Schadstoffentwicklung vorteilhaft waren, d.h. insbesondere cetanreich und aromatenarm sein sollten. Dabei gingen die Untersuchungen aus von solchen synthetischen Kohlenwasserstoff-Gemischen, wie sie aus verschiedenartigen Einsatzprodukten nach einer zwischengeschaltete Synthesegas-Erzeugung erzeugbar sind, insbesondere dann, wenn das Verfahren so geführt wird, dass ein erheblicher Anteil an Olefinen erzeugt wird, die in einem nachgeschalteten Schritt zu Isoparaffinen oligomerisiert bzw. polymerisiert werden können.

Sie fanden, dass auch problematische FAME-Produkte bei Abmischung mit dem speziellen Typ von synthetischen Kohlenwasserstoff-Gemischen mit hohem Isoparaffin-Anteil zu Produkten führen, die aufgrund ihrer hohen Cetanzahl und Aromatenfreiheit nicht nur ein hervorragendes Brennverhalten mit niedrigen Emissionswerten für die wichtigsten Schadstoffe zeigen, sondern aufgrund vorteilhafter Mischbarkeitseigenschaften und niedriger Werte für den Pourpoint (Stockpunkt) auch ein erheblich verbessertes Kälteverhalten zeigen. Das gilt sowohl bei relativ hoher Verdünnung des FAME-Bestandteils, die einen direkten Einsatz der Gemische als Kraftstoff vom Dieseltyp ermöglicht, als insbesondere auch bei Gemischen mit höheren bis hohen FAME-Konzentrationen, die für eine nachgeschaltete weitere Abmischung mit einem flüssigen Kraftstoff, z.B. einem herkömmlichen Dieselkraftstoff, verwendet werden können.

Synthetische Kohlenwasserstoff-Gemische, die aus verschiedenen Einsatzprodukten über eine zwischengeschaltete Synthesegas-Erzeugung synthetisiert werden und aus denen die erfindungsgemäß zu verwendenden Kohlenwasserstoffgemische vorzugsweise ausgewählt werden können, schließen insbesondere ein
- BtL-Kraftstoffe (BtL: Biomass-to-Liquid), die nach Verfahren erzeugt werden, bei denen zuerst eine getrocknete Biomasse (z.B. Brennholz, Stroh, Bioabfall, Tiermehl, Schilf u.ä.) vergast und zu einem Synthesegas verarbeitet wird, aus dem anschließend katalytisch flüssige Kohlenwasserstoff-Gemische hergestellt werden; oder
- GtL-Kraftstoffe (GtL: Gas-to-Liquids), bei denen ein in der Regel fossiles Ausgangsprodukt wie Erdgas, Erdölrückstände oder Kohle in Synthesegas überführt wird und aus dem Synthesegas anschließend katalytisch in einer oder mehreren Konversionsstufen flüssige Kohlenwasserstoffgemische erzeugt werden.

Sowohl BtL- als auch GtL-Kraftstoffe können aufgrund der verwendeten Ausgangsprodukte und Produktionstechnologie in weitgehend oder vollständig schwefelfreien und/oder aromatenfreien Qualitäten hergestellt werden, die auf dem Weltmarkt erhältlich sind. Für die Zwecke der vorliegenden Erfindung wurden solche Produkte ausgewählt, die geeignet sind, bei ihrer Abmischung mit FAME die in den Ansprüchen und nachfolgend genauer definierten Kriterien zu erfüllen. Derartige Produkte sind insbesondere Kohlenwasserstoff-Gemische mit einem hohen Isoparaffinanteil von 75 Masse-% und mehr.

Charakteristische Kenndaten von zwei als synthetische Kohlenwasserstoff-Komponenten geeigneten Produkten KW1 (ein Kerosin) und KW2 (ein Gasöl) sind in der nachstehenden Tabelle 2 angeführt. Zum Vergleich enthält Tabelle 2 außerdem die Kenndaten eines dritten Kohlenwasserstoffs (KW3) aus der Weltproduktion.

**Tabelle 2**

| Charakterisierung von zwei synthetischen Kohlenwasserstoffgemischen, die im Rahmen der vorliegenden Erfindung zum Abmischen mit FAME-Produkten geeignet sind | | | | |
|---|---|---|---|---|
| Kennwert | Bestimmungsmethode | Komponente 1 (KW1) | Komponente 2 (KW2) | Produkt* (KW3) |
| Dichte bei 15°C, kg/m³ | ASTM D 4052 | 765 | 795 | 780 |
| Flammpunkt, °C | ASTM D 93 | 64 | 96 | > 55 |
| Mehrkernaromaten, % | EP 1654 | <0,0001 | <0,001 | <0,001 |
| Anilinpunkt, °C | ASTM D 611 | 81 | 90 | |
| Pourpoint, °C | ASTM D | -60 | -50 | 0 |
| Siedebeginn, °C | ASTM D 86 | 180 | 220 | |
| Siedeende, °C | ASTM D 86 | 210 | 358 | <360 |
| Cetanzahl | ASTM D 613 | 53 | 58 | 74 |

| | | | | |
|---|---|---|---|---|
| * Vergleichsprodukt KW3 aus der Weltproduktion | | | | |

Die wesentliche Unterschiede zwischen erfindungsgemässen Kohlenwasserstoff-Komponenten (KW1 und KW2) und KW3 sind das Kälteverhalten und die Cetanzahl.

Bezüglich der Kenndaten Kälteverhalten und Cetanzahl gilt:
(i) die höhere Cetanzahl von Kohlenwasserstoff-Komponenten wie KW3, die direkt nach einem Fischer-Tropsch-Verfahren erhalten werden, ist zurückzuführen auf einem höheren Anteil an Normalparaffinen, während
(ii) das bessere Kälteverhalten erfindungsgemäß zu verwendender Kohlenwasserstoff-Komponenten wie KW 1 und KW2 auf einem höheren Anteil an Isoparaffinen beruht, die durch Oligomerisierung zw. Polymerisierung von Olefinen erhältlich sind.

Bezüglich der genannten Kenndaten besteht somit eine inverse Beziehung ("trade off"), indem ein besseres Kälteverhalten der Kohlenwasserstoff-Komponenten nur erreicht werden kann auf Kosten der Absenkung der Cetanzahlen.

Patente und Patentanmeldungen, die sich auf Mischungen aus Kohlenwasserstoffen und Biodiesel beziehen, diskutieren direkt oder implizit nur eine Verwendung von Kohlenwasserstoff-Komponenten, wie sie direkt durch Fischer-Tropsch-Verfahren erzeugt werden können und die hohe Anteile an Normalparaffinen aufweisen. Zu nennen sind hier beispielsweise die Dokumente US 2004/231 237 A1 (de Boer Jake) und US 6 056 793 A (Suppes Galen).

Derartige Kohlenwasserstoff-Komponenten weisen Kenndaten auf, wie sie in der obigen Tabelle 2 für das Vergleichsprodukt KW 3 gezeigt werden, das hauptsächlich Normalparaffine und nur relativ geringe Anteile an Isoparaffinen enthält. Derartige Produkte weisen ein so unbefriedigendes Kälteverhalten auf, dass sogar eine Zumischung von Biodiesel (und zwar Rapsölmethylester RME) mit dem Ziel erfolgt, das Kälteverhalten der Mischung zu verbessern (vgl. US 2004/231 237 A1, Absatz 50).

Erfindungsgemäss werden Kraftstoffmischungen geschaffen, bei denen in einem genau umgekehrten Sinne das Kälteverhalten eines Biodiesels (FAME-Komponente) durch eine Kohlenwasserstoff-Komponente mit hervorragender Kältefestigkeit verbessert wird: Dank des hohen Isoparaffineanteils in der Kohlenwasserstoff-Komponente kann diese dazu verwendet werden, um das Kälteverhalten des Biodiesels zu verbessern.

Außerdem ist eine solche Kohlenwasserstoff-Komponente mit hohem Isoparaffinanteil auch dazu geeignet, durch Vermischen mit Kohlenwasserstoff-Komponenten anderer chemischer bzw. verfahrenstechnischer Herkunft, die überwiegend Normalparaffine enthalten und dadurch ein unbefriedigendes Kälteverhalten zeigen, neue Kohlenwasserstoff-Gemische herzustellen, die nach der Abmischung als solche ein gutes Kälteverhalten aufweisen und/oder gegebenenfalls als Mischung einem Biodiesel zugesetzt werden können, um dessen Kälteverhalten zu verbessern.

Auch das in der Patentanmeldung WO 2005/087903 A1 beschriebene "Syncrude"-Produkt ist ein Kohlenwasserstoff mit einem Hauptanteil an Normalparaffinen (statt Isoparaffinen), so dass auch ein "Syncrude"-Produkt eher dem Kenndaten-Muster von KW 3 entspricht als dem Muster der erfindungsgemässen Kohlenwasserstoff-Komponenten KW 1 und 2, die einen hohen Anteil an Isoparaffinen aufweisen. Ziel der Kraftstoffe gemäß WO 2005/087903 A1 ist die Verringerung von NOx- und SOx-Emissionen, jedoch nicht eine Verbesserung des Kälteverhaltens.

Obwohl es auch möglich ist, den Anteil an Isoparaffinen von Kohlenwasserstoffgemischen durch Isomerisierung oder Cracken zu erhöhen, werden erfindungsgemässe Kohlenwasserstoff-Komponenten (mit einem Hauptanteil an Isoparaffinen) vorzugsweise durch Oligomerisierung (bzw. Polymerisierung) von Olefinen erzeugt.

Die katalytische Oligomerisierung (bzw. Polymerisierung) von Olefinen zur Erzeugung von Isoparaffinen ist in der Literatur gut beschrieben. Olefine werden dabei in Gegenwart eines geeigneten Katalysators zu Paraffinen, insbesondere Isoparaffinen mit 8-18 C-Atomen, oligomerisiert. Es kann in diesem Zusammenhang verwiesen werden auf die Patente US 4 417 088, US 4 827 064, US 4 828 073 und US 4 990 709, deren Inhalt zur Ergänzung der vorliegenden Offenbarung mit heran zu ziehen ist. Die Oligomerisierungs- bzw. Polymerisierungs-Reaktion kann in verschiedenen Reaktortypen mit verschiedenen Katalysatoren (Silikate, Zeolithe, BF₃, HF, H₂SO₄, AlCl₃) durchgeführt werden. Dementsprechend weit ist bei den jeweiligen Verfahren auch der Bereich der zur Anwendung kommenden Betriebsbedingungen (0 bis 400 °C, 0,1 bis 3 LHSV und Drücke zwischen 0 und 2000 psig bzw. 0 und etwa 138 bar Überdruck). Dabei werden vor allem C2 bis C6-Olefine zu Kohlenwasserstoffen mit bis zu 20 C-Atomen oligomerisiert.

Schema I zeigt die zugehörige Folge von Reaktionen:
C2-C6 Olefine --> Oligomerisierung ---> Oligomere KW -C20

Die zur Oligomerisierung herangezogenen Olefine können aus verschiedenen Quellen stammen. So können sie z.B. auch mittels eines Fischer-Tropsch-Verfahrens erhalten werden. Beim sogenannten "High Temperature Fischer Tropsch" (mit Eisenkatalysatoren) fallen z.B. teilweise direkt Olefine an, die durch darauffolgende Oligomerisierung zu den erfindungsgemässen Kohlenwasserstoff-Komponenten mit hohem Isoparaffin-Anteil (75 Masse-% und mehr) verarbeitet werden können.

Die beim "Low Temperature Fischer Tropsch" (LTFT) unter Verwendung von Kobaltkatalysatoren anfallenden Destillate und Wachsmassen enthalten zu wenige Isoparaffine (vgl. KW3; Tabelle 2), so dass die notwendigen Isoparaffine mittels Isomerisierung oder Cracking erzeugt werden müssen.

Schema II zeigt die Reaktionen bei einem derartigen Vorgehen:

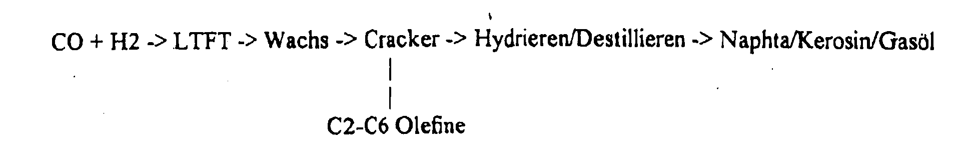

Die zur Oligomerisierung verwendeten C2-C6 Olefine können aber auch aus anderen Verfahren stammen, da es vielerlei Wege gibt, derartige Olefine zu erzeugen.

So haben die Erfinder ein Verfahren zur Erzeugung von Flugzeugturbinentreibstoffen aus Biomasse mit den folgenden Verfahrensschritten entwickelt:
1) In einem ersten Schritt werden aus Biomasse durch Fermentation mit geeigneten Enzymen (z.B. gemäß CA 121 3233 oder GB 209 78 171, die die Herstellung von Isopropanol beschreiben), oder gegebenenfalls durch Umwandlung von Biogas in Synthesegas und dessen katalytische Weiterverarbeitung, C1-C5 Alkohole (Methanol, Ethanol, Propanol, Butanol, Pentanol) erzeugt, die ein erstes Zwischenprodukt darstellen.
2) Diese Alkohole werden in einem zweiten Verfahrensschritt einzeln oder im Gemisch zu Olefinen dehydratisiert. Über modifizierte Zirkonoxide als Katalysator zur Dehydratisierung wird in EP 1 231 194 (2002/08194) berichtet. Im Patent US 4 260 845 werden aktivierte Zinkaluminate als Katalysator verwendet. Für die erfindungsgemässe zweite Verfahrensstufe werden vorzugsweise feste Katalysatoren auf Basis Aluminiumoxid oder kombinierten Oxiden (Al, Zr) verwendet. Bei einem an sich bekannten Verfahren, bei dem Methanol an einem ZeolithKatalysator (SAPO-34) in C2 bis C5-Olefine umgewandelt wird, ist es dabei wichtig, dass so viel Methanol im Alkoholgemisch vorhanden ist, dass nach der Dehydratisierung mindestens 50 Masse-% ungeradzahlige Olefine (z.B. Propylen) und Isoolefine erhalten werden.
3) Die erzeugten Olefine werden dann nach an sich bekannten Verfahren (s. z.B. US 4 417 088, US 4 827 064, US 4 828 073 und US 4 990 709) polymerisiert bzw. oligomerisiert. Hierbei gewährleistet der oben erwähnte Anteil von mindestens 50 Masse-% an ungeradzahligen Olefinen und Isoolefinen im Olefingemisch, dass im resultierenden Kohlenwasserstoffgemisch ein ausreichender Anteil an Isoparaffinen (mindestens 75 %) erhalten wird.
4) Dieses Kohlenwasserstoffgemisch wird zwecks Absättigung restlicher Doppelbindungen und Entfernung störender Verbindungen (z.B. Aromaten) hydriert und anschließend durch Destillation aufgetrennt, wobei die Fraktion mit einem Siedebeginn 160 °C und einem Siedeende von maximal 300 °C als Flugzeugturbinentreibstoff aus der Fraktionierkolonne abgenommen wird.

Schema III zeigt die Reaktionsfolge des beschriebenen Verfahrens:

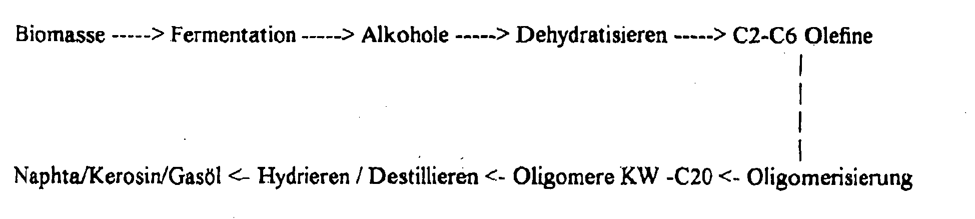

Der bei diesem Verfahren erhältliche Flugzeugtreibstoff ("Biogen Jet-A1") weist die folgenden Eigenschaften gemäß Tabelle 3 auf:

**Tabelle 3**

| Kennwert | Biogen Jet-A1 | AFQRJOS |
|---|---|---|
| Dichte bei 15°C, kg/m³ | 780 | 775-840 |
| Flammpunkt, °C | >38 | >38 |
| Freezing Point, °C | <-50 | <-47 |
| Schwefelgehalt, % | <0,01 | <0,3 |
| Mehrkernaromaten, % | <0,01 | <3 |
| Smokepoint, M | > 40 | > 25 |
| Siedeverhalten: | | |
| Ausbeute (10 Vol.-%), °C | 185 | <205 |
| Siedeende, °C | 220 | <300 |

Der resultierende Flugzeugtreibstoff auf der Basis von Olefinen erfüllt somit alle gängige Qualitätsanforderungen für Jet A-1 Flugzeugturbinentreibstoffe (AFQRJOS / DEF STAN 91-91 Iss.5 / ASTM 1655-04a).

Mit Hilfe des beschriebenen Verfahrens (vgl. Anspruch 8) ist es den Erfindern also gelungen, erstmals einen normgerechten Flugzeugturbinentreibstoff biogener Herkunft zu erzeugen.

Aus den obigen Erläuterungen ergibt sich, dass die zur Oligomerisierung herangezogenen Olefine (C2 bis C6 Olefine), aus denen ein Kohlenwasserstoffgemisch mit einem hohen Anteil an Isoparaffinen (C20 und weniger, d.h. -C20; insbesondere C8 bis C18) hergestellt werden kann, auf vielerlei Art erzeugt werden können.

Schema IV fasst die verschiedenen Reaktionswege zusammen:
i) CO + H2 --> Low Temperature Fischer Tropsch --> Wachs --> Cracker --> C2 - C6 Olefine
ii) CO + H2 -----> Fischer Tropsch ----> Alkohole ----> Dehydratisieren -----> C2 - C6 Olefine

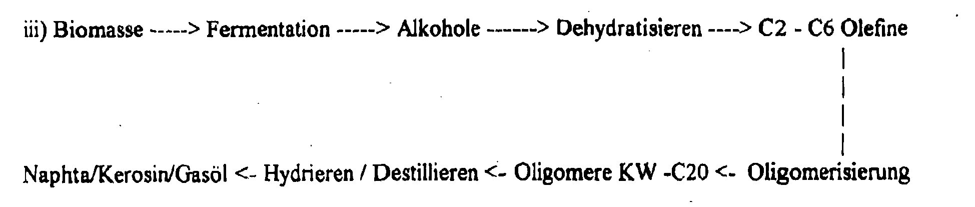

Gleichzeitig belegt das genannte Verfahren zur Erzeugung eines Flugzeugturbinentreibstoffs beispielhaft, wie sehr der Anteil an Isoparaffinen in der Kohlenwasserstoff-Komponente das Kälteverhalten des damit erzeugten erfindungsgemässen Treibstoffgemisches beeinflusst: Der in Tabelle 3 beschriebene Flugzeugturbinentreibstoff hat einen Freezing Point unter - 47 °C. Er ist daher auch als Kohlenwasserstoff-Komponente zur Verbesserung des Kälteverhaltens eines diesbezüglich mangelhaften Biodiesels geeignet, indem man den genannten Treibstoff einem Biodiesel zusetzt.

In Rahmen von Versuchen wurde gefunden, dass bei Verwendung einer speziellen Kohlenwasserstoff-Komponente des genannten Typs, die die Angaben im Anspruch 1 erfüllt, sehr wenige Aromaten, insbesondere keinerlei Mehrkernaromaten, in ein FAME enthaltendes Gemisch gelangen und das Kälteverhalten von FAME mit relativ hohen Anteilen an gesättigten Fettsäureestern stark verbessert wird. Durch zusätzliches Abmischen mit anderen Fettsäureestern als weitere Gemischkomponente kann insbesondere das Kälteverhalten des erhaltenen Gemischs weiter so weit verbessert werden, dass ein stabiler und kältebeständiger Kraftstoff erhalten wird, der als aromatenfreier Dieselkraftstoff oder als unproblematisch transportier- und lagerbare Mischkomponente für einen Dieselkraftstoff verwendet werden kann.

Um die für ein spezielles Einsatzgebiet benötigte jeweilige Kältestabilität zu erreichen, sollte nach der Abmischung mit Biodiesel gemäß der vorliegenden Erfindung die Menge der gesättigten Fettsäureester im Gemisch einen bestimmten Konzentrationsbereich nicht überschreiten.

Dabei gilt als Regel, dass
- dann, wenn der CFPP der Zusammensetzung -15 °C oder weniger betragen soll, die Konzentration an gesättigten C16-C22 Fettsäuremethylestern in der Zusammensetzung 5 Masse-% nicht übeschreiten soll, und
- dann, wenn der CFPP der Zusammensetzung bei 0 °C und höher liegen darf, die Konzentration an gesättigten C16-C22 Fettsäuremethylestern in der Zusammensetzung bei 20 Masse-% und mehr liegen kann.

Die genannten Konzentrationsgrenzen zur Einstellung eines CFPP-Wertes gelten für FAME oder FAME-Mischungen oder Mischungen aus FAME mit Kohlenwasserstoffgemischen, bei denen die gesättigten (C16 bis C22) Fettsäuremethylester in den in der nachfolgenden Tabelle 4 genannten Konzentrationsbereichen vorhanden sind.

**Tabelle 4**

| Zulässige Konzentrationsbereiche (Masse-%) für Methylester von gesättigten C16 bis C22 Fettsäuren | | |
|---|---|---|
| C-Zahl des gesättigten Esters | Konzentrations-Bereich Masse-% | Bevorzugter Bereich Masse-% |
| C16 | 0 - 40 | 0 - 20 |
| C18 | 0 - 20 | 0 - 10 |
| C20 | 0 - 5 | 0 - 1 |
| C22 | 0 - 1 | < 1 |
| Die Konzentration an ungesättigten Fettsäureestern sollte außerdem über der Konzentration der gesättigten liegen | | |

Der in den Zusammensetzungen der Tabelle 4 auf 100% fehlende Rest sind ungesättigte Fettsäureester und/oder Kohlenwasserstoff-Gemische wie z.B. Dieselkraftstoff, Jet, Kerosin u.a. mit einer Kältestabilität <-20°C.

Bei binären Kraftstoffzusammensetzungen aus FAME und Kohlenwasserstoffgemischen bestimmt das Verhältnis der beiden Komponenten in den Zusammensetzungen, und deren Auswahl, d.h. der speziellen Fettsäureester-Komponente (z.B. RME, POME und/oder SME) einerseits und der speziellen Kohlenwasserstoffgemisch-Komponente (vgl. z.B. die Produkte KW1 und KW2 bzw. KW3 gemäß Tabelle 2) andererseits, das Kälteverhalten der Gesamt-Zusammensetzung, ausgedrückt als deren CFPP.

Beispielhaft werden ferner nachstehend in Tabelle 5 die Ergebnisse von Untersuchungen zur Kältestabilität (ausgedrückt als CFPP) mit POME (FAME 1) in Abmischungen mit einem weiteren FAME-Produkt (FAME 2; Sojamethylester; SME) sowie den Kohlenwasserstoff-Komponenten KW1 und KW2 aus Tabelle 2 bei Einhaltung von Konzentrationswerten für das Gesamtgemisch im Bereich der Tabelle 4 aufgeführt; gegenüber gestellt werden die Werte für ein Rapsölfettsäuremethylester-Produkt (FAME 3; RME):

**Tabelle 5**

| Werte für den CFPP für verschiedene Gemische aus FAME und synthetischen Kohlenwasserstoff-Gemischen | | | | | | | | | | |
|---|---|---|---|---|---|---|---|---|---|---|
| FAME 1 | FAME 2 | FAME 3 | KW 1 | KW 2 | C16 | C18 | C20 | C22 | Summe ges. Est. | CFPP °C |
| 100 | | | | | 39,5 | 4,3 | 0,4 | 0,1 | 43,8 | 11 |
| | 100 | | | | 10,5 | 3,8 | 0,3 | | 14,7 | -2 |
| 25 | 25 | | 50 | | 13,1 | 2,3 | 0,2 | 0,2 | 15,8 | -4 |
| 15 | 35 | | 50 | | 10,5 | 2,4 | 0,2 | 0,3 | 13,4 | -7 |
| | | 100 | | | 4,5 | 1,8 | 0,5 | 0,3 | 7,1 | -14 |
| | 20 | | | 80 | 2,1 | 0,8 | <0,1 | | 2,9 | -17 |

Das Vermischen der Komponenten FAME/synthetisches Kohlenwasserstoffgemisch mit hohem Anteil an Isoparaffinen kann auf verschiedene Weise erfolgen:

Bei Verwendung mehrerer unterschiedlicher Fettsäuremethylester ist es sinnvoll, zunächst die Ester zu mischen und dann mit den Kohlenwasserstoffen zu verdünnen. Wenn die Mischung bei tiefen Temperaturen hergestellt werden muss, kann zunächst ein Ester mit Kohlenwasserstoffen verdünnt und dann mit einem zweiten Ester vermischt werden.

Es kann auch zielführend sein, bei der Verdünnung mit Kohlenwasserstoffen einen geeigneten Lösungsvermittler einzusetzen.

Bei Bedarf können dem Gemisch zuletzt auch die für weitere anwendungsbezogene Verbesserungen erforderlichen Additive zudosiert werden. Dies können z.B. Fließverbesserer, Detergentien, Dispergiermittel, Antischaummittel, Korrosionsschutzmittel, Dehazer und Antioxidantien sein.

Lubricity-Additive müssen normalerweise nicht zugesetzt werden, weil ein weiterer Vorteil der erfindungsgemäßen Mischungen darin liegt, dass die Fettsäureester der KW-Mischkomponente ausreichende Schmierwirkung verleihen.

Wie der Fachmann in Tabelle 2 erkennen kann, erfüllen die synthetischen Kohlenwasserstoffgemische KW1 und KW2 als unvermischte Produkte nicht die Norm EN 590, die bezüglich der Dichte mindestens 820 kg/m³ (15°C) und bezüglich der Schmierfähigkeit eine Grenze von 460 µm vorschreibt. Nach Beimischung von Fettsäureestern gemäß der vorliegenden Erfindung ergeben sich für die Zusammensetzung Werte für die Dichte und die Schmierfähigkeit, die innerhalb der von der Norm EN 590 gesetzten Grenzen liegen.

Abschließend kann festgestellt werden, dass es den Erfindern gelungen ist, durch Zumischung gezielt ausgewählter Kohlenwasserstoff-Gemische mit einem hohen Anteil an Isoparaffinen, wie sie auf dem Wege der Oligomerisierung von Olefinen erhältlich sind, das Kälteverhalten von Fettsäuremethylestern (Anspruch 1/Anspruch 2), sowie das von anderen synthetischen Kohlenwasserstoff-Gemischen (Anspruch 6), erheblich zu verbessern, wodurch die Lagerungs- und Transportmöglichkeiten der resultierenden Kraftstoffgemische erheblich erweitert werden.

## Patentansprüche

1. Kraftstoffzusammensetzung zur Verbrennung in Motoren und Heizanlagen, die eine Fettsäureester-Komponente und eine synthetische Kohlenwasserstoff-Komponente umfasst, wobei (i) die Fettsäureester-Komponente von Methyl- oder Ethylestern von Fettsäuren mit 8 bis 22 C-Atomen gebildet wird, und (ii) die synthetische Kohlenwasserstoff-Komponente mehr als 75 Masse-% Isoparaffine enthält, einen Pourpoint von -20 °C oder tiefer und eine Cetanzahl im Bereich vom 40 bis 70 aufweist, wobei die Konzentration der Kohlenwasserstoff-Komponente in der Zusammensetzung zwischen 1 und 99 Masse-% liegt.

2. Kraftstoffzusammensetzung nach Anspruch 1, bei der die Konzentration der Kohlenwasserstoff-Komponente in der Zusammensetzung zwischen 50 und 99 Masse-%, insbesondere zwischen 80 und 99 Masse-%, liegt.

3. Kraftstoffzusammensetzung nach Anspruch 1 oder 2, wobei die Fettsäureester-Komponente ausgewählt ist aus einer Gruppe, die Rapsölfettsäuremethylester, Sojaölfettsäuremethylester, Sonnenblumenölfettsäuremethylester, Kokosölfettsäuremethylester, Jatrophaölfettsäuremethylester, Palmölfettsäuremethylester, Palmkernölfettsäuremethylester, Ricinusölfettsäuremethylester, Baumwollsamenölfettsäuremethylester, Altölfettsäuremethylester und Fettsäuremethylester aus tierischen Fetten und beliebige Gemische daraus umfasst.

4. Kraftstoffzusammensetzung nach einem der Ansprüche 1 bis 3, wobei die Fettsäureester-Komponente so ausgewählt ist, dass die Konzentration an ungesättigten Fettsäureestern (C8 bis C14) in der Zusammensetzung über der Konzentration der gesättigten Fettsäureester (C16 bis C22) liegt, während der Anteil an C20 und an C22 Verbindungen in der Zusammensetzung nicht mehr als jeweils 1 Masse-% beträgt.

5. Kraftstoffzusammensetzung nach einem der Ansprüche 1 bis 4, wobei das synthetische Kohlenwasserstoffgemisch ein durch Oligomerisierung bzw. Polymerisierung von C2 bis C6-Olefinen erhaltenes Kohlenwasserstoffgemisch ist oder ein solches umfasst.

6. Kraftstoffzusammensetzung zur Verbrennung in Motoren und Heizanlagen, aus zwei unterschiedlichen synthetischen Kohlenwasserstoff-Komponenten, wobei eine dieser Komponenten mehr als 75 Masse-% Isoparaffine enthält, einen Pourpoint von -20 °C oder tiefer und eine Cetanzahl im Bereich vom 40 bis 70 aufweist und wobei die Konzentration der genannten Kohlenwasserstoff-Komponente in der Zusammensetzung zwischen 1 und 99 Masse-% liegt.

7. Kraftstoffzusammensetzung nach Anspruch 6, wobei die Komponente mit mehr als 75 Masse-% Isoparaffine ein synthetisches Kohlenwasserstoffgemisch ist, das durch Oligomerisierung bzw. Polymerisierung von C2 bis C6-Olefinen erhalten wurde.

8. Verfahren zur Herstellung eines Flugzeugturbinentreibstoffs auf Basis biogener Alkohole, bei dem aus einem Olefinkohlenwasserstoff-Gemisch mit einem Anteil an ungeraden Olefinen und Isoolefinen von mindestens 50 Masse-% ein synthetischer Kohlenwasserstoff mit einem Isoparaffin-Anteil von mindestens 75 Masse-% oligomerisiert bzw. polymerisiert wird, woraus nach einer folgenden Hydrierung und Rektifikation ein Kerosin abgenomen wird, das in seinem Kohlenstoffanteil 1,2 x 10⁻¹² Masse-% des Radionuklids ¹⁴C aufweist.

9. Biogener Flugzeugturbinentreibstoff, erhalten nach einem Verfahren gemäß Anspruch 8, der eine Freezing Point von -47 °C und tiefer und in seinem Kohlenstoffanteil 1,2 x 10⁻¹² Masse-% des Radionuklids ¹⁴C aufweist.

10. Verwendung einer Kraftstoffzusammensetzung nach einem der Ansprüche 1 bis 7 und 9 zur Abmischung mit einem herkömmlichen Dieselkraftstoff oder Kerosin.
